# EUROPEAN PATENT APPLICATION

(11) **EP 4 001 689 A1**
(43) Date of publication of application: **25.05.2022**
(21) Application number: 20841542.2
(22) Date of filing: 20.07.2020
(51) Int. Cl.: F16D 69/02, C04B 28/00, C04B 111/00

(54) **PROCESS FOR MANUFACTURING FRICTION MATERIAL, INORGANIC LIQUID BINDER, USE OF LIQUID BINDER FOR MANUFACTURING FRICTION MATERIAL, AND FRICTION MATERIAL**

(30) Priority: 18.07.2019 BR 102019014855
(71) Applicant: Fras-Le S.A., 95115-550 Caxias do Sul (BR); Fundação Universidade de Caxias do Sul, 95070-560 Caxias do Sul (BR)
(72) Inventor: PEREIRA, Carlos Henrique Selle, 95099-350 Caxias do Sul (BR); CASARIL, Alexandre, 95110-117 Caxias do Sul (BR); CRUZ, Robinson Carlos Dudley, 95020-472 Caxias do Sul (BR)
(74) Representative: Grünecker Patent- und Rechtsanwälte PartG mbB
(86) International application number: PCT/BR2020/050273
(87) International publication number: WO 2021/007641

(57) **Abstract**

The present invention describes a manufacturing process of friction material and an inorganic liquid binder for use in manufacture of friction materials. Specifically, the present invention comprises a manufacturing process of friction material that makes use of a liquid binder that provides the performance of process steps with significant reduction in temperature, pressure and manufacturing time, making the process more energy efficient. It also comprises a step of manufacturing process of liquid binder that allows the use of different types of inorganic precursors with crystalline and/or amorphous features, through a mechanical activation process of the inorganic precursor. The present invention is pertained to the fields of chemical engineering, mechanical engineering, materials engineering, focused on the area of friction materials for vehicle brake systems.

## Description

### Field of the Invention

The present invention describes a manufacturing process of friction material and an inorganic liquid binder to use for manufacturing friction materials. Specifically, the present invention comprises a manufacturing process of friction material that makes use of a liquid binder that offers the performance of process steps with expressive reduction of temperature, pressure and manufacturing time, making the process more energy efficient. Further, it comprises a manufacturing process step of liquid binder that allows the use of different types of precursors, including inorganic ones with crystalline and/or amorphous features, through a mechanical activation process of the inorganic precursor. The present invention is pertained to the fields of chemical engineering, mechanical engineering, materials engineering, focused on area of friction materials for vehicle brake systems.

### Background of the Invention

Friction materials are widely used for manufacturing components of brake systems, such as brake pads, brake linings and brake shoes, of small, medium and large vehicles for passenger or cargo transport, such as passenger vehicles, buses, trucks, trains, among others.

The manufacturing processes of friction materials for brake systems in the state of the art involve large energy expenditures, mainly in the curing and molding steps, varying according to the raw materials used to form the friction material. Further, the energy costs are associated with the high temperatures and pressures required in these steps, as well as a great demand for process time with high temperatures and pressures.

Also, the manufacturing of friction material of the prior art uses, briefly, a mixture of a phenolic resin with a friction material and, subsequently, the mixture is subjected to pressing under high temperature to cure the resin and compact the mixture.

However, phenolic resin is a material that can pose risks to the environment, since, due to industrial and domestic pollutant sources and from agricultural activities, phenolic resin can be deposited in the soil or in rivers, which may cause harm to wildlife. Moreover, it has a relatively high carbon footprint, generating between 1.3 to 2.3 kg of carbon dioxide per kg of resin produced.

In the search for the state of the art in scientific and patent literatures, the following documents were found dealing with the subject:

WO2014081277 discloses a solid volcanic ash geopolymer composition for producing a geopolymer composite for use in building material and/or friction material, in which the use of volcanic ash is comparable to the use of fly ash. To obtain the volcanic ash in the desired particle size, the document describes a process for drying, crushing and sieving the volcanic ash, such process is done before the mixing process to obtain the geopolymer, which already requires an energy expenditure in a previous step to the geopolymer mixture, making the process energy inefficient. Furthermore, WO2014081277 does not mention the formation of an inorganic liquid binder through the combination of pre-ground inorganic precursors and a solution, obtaining a solution and/or suspension with varied viscosities for mixing with the other raw materials of the friction material.

US2017016500 discloses a friction material for the manufacture of brake pads, in which a premix step of inorganic binder is performed in the manufacture of kaolin or metakaolin and sodium hydroxide in a mixer. Afterwards, this mixture in gel form is placed in a mold for pressing under pressure and predefined pressures in a period of time, later the mixture is placed in an oven for drying, and finally, a dry mass is placed again in the mixer to be reduced to powder form. Therefore, a solid inorganic binder is formed, being added to the other raw materials to form the friction material and submitted again to the pressing process. However, US2017016500 does not mention the formation of an inorganic liquid binder through the combination of previously ground inorganic precursors and a solution, obtaining a solution and/or suspension with varied viscosities for mixing with the other raw materials of the friction material.

WO2020039396 discloses a method for preparing a friction material for brake pad, which includes a step of mixing sodium hydroxide and sodium silicate with commercial metakaolin for obtaining a wet paste, such wet paste is undergone to a drying process until a dry geopolymer aggregate is obtained. Afterwards, the dry aggregate is ground into a powder and the powder is used as an inorganic binder for mixing with the other raw materials of friction material. However, WO2020039396 does not mention the formation of an inorganic liquid binder by mixing mechanically activated inorganic precursors by means of grinding and a solution, obtaining a solution and/or suspension with varying viscosities for mixing with the other raw materials of the material of friction. Furthermore, it mentions that the solid inorganic binder must have an amorphous feature when evaluated by X-ray diffraction techniques and does not mention that it may have a crystalline characteristic.

Thus, from what appears from the researched literature, no documents were found anticipating or suggesting the teachings of the present invention, so that the solution proposed herein has novelty and inventive step compared to the state of the art.

Therefore, the state of the art lacks manufacturing processes of friction materials that provide reduced energy expenditure with reduced pressures and temperatures and that provide optimization of manufacturing time, as well as making the process easier. Moreover, the state of the art lacks a manufacturing process that allows the use of a variety of inorganic precursors to form the inorganic binder.

### Summary of the Invention

Thus, the present invention solves the problems of the prior art from a manufacturing process of friction material that uses an inorganic liquid binder produced via an initial step of mechanical activation of crystalline and/or amorphous inorganic precursors by means of grinding, and thermal synthesis with the mixture of oxides and/or hydroxides and/or silicates of alkali metals and alkaline-earth metals with inorganic precursors. Also, the manufacturing process that uses inorganic liquid binder reduces energy costs, since it does not require a step of drying and grinding the inorganic binder for mixing, being used in the liquid state for mixing with other components of the friction material, as well as performing the cold forming step, with reduced temperature, pressure and compression time compared to the prior art.

In a first object, the present invention presents a manufacturing process of friction material that comprises at least the steps of:
a. combination of at least one liquid binder with at least one complementary material, forming a mixture;
b. cold forming of the mixture with predetermined temperature, pressure and compression time; and
c. completion of the mixture curing with predetermined temperature and time.

Furthermore, it is an object of the invention a manufacturing process of liquid binder comprising at least the steps of:
a. mechanical activation of at least one inorganic precursor by means of grinding, forming a crystalline and/or amorphous structure; and
b. combination of the mechanically activated inorganic precursor with at least one solution of alkali metal/alkaline-earth metal hydroxide and/or alkali metal/alkaline-earth metal silicate, forming the liquid binder.

In a second object, the present invention presents an inorganic liquid binder comprising a combination of at least one solution and at least one mechanically activated crystalline and/or amorphous inorganic precursor, wherein said solution comprises at least one hydroxide of alkali metal/alkaline-earth metal and/or at least one alkali metal/alkaline-earth metal silicate.

In a third object, the present invention presents the use of inorganic liquid binder for manufacturing friction material comprising a mixture of inorganic liquid binder with at least one complementary material, in which:
a. the liquid binder comprises a combination of at least one solution and at least one mechanically activated crystalline and/or amorphous inorganic precursor, wherein said solution comprises at least one alkali metal/alkaline-earth metal hydroxide and/or at least one alkali metal/ alkaline-earth metal silicate; and
b. the complementary material comprises at least one of:
   i. mineral load;
   ii. organic fiber;
   iii. metal fiber;
   iv. inorganic fiber;
   v. rubbing agent;
   vi. lubricant;
   vii. toughener; or
   viii. a combination of the above.

In a fourth object, the present invention presents a friction material comprising a mixture of at least one inorganic liquid binder and at least one complementary material, wherein the binder comprises a combination of at least one solution and at least one mechanically activated crystalline and/or amorphous inorganic precursor, wherein said solution comprises at least one alkali metal/alkaline-earth metal hydroxide and/or at least one alkali metal/alkaline-earth metal silicate.

These and other objects of the invention will be immediately appreciated by those skilled in the art and will be described in detail below.

### Brief Description of the Drawings

The following figures are presented:
- Figure 1 shows the results of a comparative test of braking efficiency conducted in a dynamometer before the fade step between a material of the prior art and the present invention.
- Figure 2 shows the results of tests of the braking efficiency conducted in dynamometer after the fade step between the material of the prior art and the present invention.
- Figure 3 shows an embodiment of the present invention in the form of brake pads, after the procedure of testing the braking efficiency in dynamometer.
- Figure 4 shows an embodiment of the present invention in the form of brake discs after the braking efficiency testing procedure in dynamometer.

### Detailed Description of the Invention

The following descriptions are presented by way of example and do not limit the scope of the invention and will make the object of this patent application more clearly understood.

The present invention describes a manufacturing process of friction material that allows the use of different types of inorganic precursors, overcoming a limitation of the prior art, through an initial step of mechanical activation by grinding the inorganic precursor, which step precedes the step of mixing the inorganic precursor with a solution.

In a first object, the present invention presents a manufacturing process of friction material that comprises at least the steps of:
a. combination of at least one liquid binder with at least one complementary material, forming a mixture;
b. cold forming of the mixture with predetermined temperature, pressure and compression time; and
c. completion of the mixture curing with predetermined temperature and time.

In one embodiment, the liquid binder is manufactured through at least the steps of: mechanical activation of at least one inorganic precursor by means of grinding, forming crystalline and/or amorphous structure; and combining the mechanically activated inorganic precursor with at least one alkali metal/alkaline earth metal hydroxide solution and/or alkali metal/alkaline earth metal silicate, forming the liquid binder.

In one embodiment, the mechanical activation step of the inorganic precursor by means of grinding allows the use of a variety of inorganic precursor materials, since, through grinding, the inorganic precursor is ground to a size range that provides fine and adequate granulometry.

In one embodiment, the mechanical activation step of at least one inorganic precursor grinds the precursor in a particle size range less than 500 µm. In another embodiment, the mechanical activation step grinds the precursor into a particle size range of less than 100 µm. In one embodiment, the particle size range of the inorganic precursor ground in the mechanical activation step comprises a range of fine and suitable particle size.

In one embodiment, the grinding of the inorganic precursor is performed with the aid of mills. Through the parameterization of said mills, an optimal process for grinding the inorganic precursor is achieved, reaching a fine and adequate granulometry. In one embodiment, the grinding of the inorganic precursor is dry. In one embodiment, the grinding of the inorganic precursor is wet. In one embodiment, the grinding of the inorganic precursor is done with a ball mill. In one embodiment, the grinding of the inorganic precursor is done with or without a pre-mill combination. In one embodiment, the grinding of the inorganic precursor is done with different impact mills with or without the combination of pre-grinding in different mills. The use of one type or another will depend on the desired final granulometry, productivity and grinding cost per quantity of inorganic precursor.

In one embodiment, the step of combining the mechanically activated inorganic precursor with at least one alkali metal/alkaline-earth metal hydroxide solution and/or alkali metal/alkaline-earth metal silicate forms an inorganic liquid binder that improves the solubility of the mixture and facilitates mixing between the liquid binder and the complementary materials of the friction material.

In one embodiment, the alkali metal/alkaline earth metal silicate comprises at least one of: Liquid Sodium Silicate; Liquid Potassium Silicate; Anhydrous Sodium Silicate; Anhydrous Potassium Silicate; Liquid Lithium Silicate; Anhydrous Lithium Silicate; or a combination of the above. By way of example, the alkali metal/alkaline-earth metal silicate basically comprises silicon oxide combined with an alkali metal/alkaline-earth metal oxide. In one embodiment, the alkali metal/alkaline-earth metal silicate comprises at least silicon oxide associated with an alkali metal oxide. In one embodiment, the metal silicate comprises at least silicon oxide associated with the oxide of an alkaline-earth metal.

In one embodiment, the alkali metal/alkaline-earth metal hydroxide comprises at least one of: Potassium hydroxide; Sodium Hydroxide; Aluminum hydroxide; Magnesium Hydroxide; Calcium hydroxide; or a combination of the above. In one embodiment, the metal hydroxide comprises alkali metal hydroxide. In one embodiment, the metal hydroxide comprises alkaline-earth metal hydroxide. In one embodiment, the metal hydroxide is selected as a function of the metal silicate used.

In one embodiment, the liquid binder is a solution and/or suspension and comprises viscosity in a range between 10 and 100000 cP. In another embodiment, the liquid binder comprises a viscosity between 100 to 50000 cP.

In a first embodiment of binder formulation comprises a range of 22.6 to 56% of liquid silicate, a range of 35 to 46% of an inorganic precursor and a range of 0 to 10% of water as a process agent.

In a second binder formulation it comprises a range of 22.6 to 56% of liquid silicate, a range of 44 to 55% of an inorganic precursor and a range of 0 to 10% of water.

In a third embodiment of binder formulation comprises a range of 22.6 to 50% of liquid silicate, a range of 50 to 70.40% of a first inorganic precursor and a range of 0 to 10% of a second inorganic precursor, a range of 0 to 22% of a process agent, a range of 0 to 22% of a reinforcing agent, and a range of 0 to 10% of water.

In a fourth embodiment the binder formulation comprises a range of 22.6 to 50% of liquid silicate, a range of 10 to 40% of a first inorganic precursor and a range of 10 to 40% of a second inorganic precursor, a range of 0 to 22% of a process agent, a range of 0 to 19% of a reinforcing agent, and a range of 0 to 10% of water.

In a fifth embodiment of binder formulation comprises a range of 22.6 to 50% of liquid silicate, a range of 50 to 75% of an inorganic precursor, a range of 0 to 22% of a process agent, a range of 0 to 19% of a reinforcing agent and a range of 0 to 10% of water.

In a sixth embodiment the binder formulation comprises a range of 22.6 to 50% of liquid silicate, a range of 50 to 75% of an inorganic precursor, a range of 0 to 22% of a process agent and a range of 0 to 22% of a reinforcing agent.

In one embodiment, the liquid silicate comprises at least one of: mineral fiber; lithium silicate, corrected potassium silicate R = 1.5; activated potassium silicate; corrected sodium silicate R = 1.5; potassium silicate; sodium silicate; or a combination of the above.

In one embodiment, the inorganic precursor comprises at least one of the materials belonging to the families of igneous, metamorphic or sedimentary rocks and/or by-products and co-products of the steel, thermoelectric, ceramic, mining and civil construction industries as, by the way of example, metakaolin, clays, basaltic rocks, granites, sandstones, carbonates, phosphates, silicates, aluminates, blast furnace slags, heavy ash and flywheels of coal and/or biomass, rice husk ash, glass, tailings, sludges, concentrates, demolition waste, or a combination of the above.

In one embodiment, the process agent comprises at least one compound with the following functionalities: surface modifiers, surfactants, compatibilizing agents (organosilanes, cellulose-based compounds and their derivatives, such as nanocellulose, for example), thickeners, dispersants and/or flocculants, polymeric and/or inorganic rheological modifiers, binders, plasticizers or chelators (such as, by the way of example, fatty and/or carboxylic acids, polyphenols, sugars, starches, amines, vinyls, ammonia, acrylates, stearates, phosphates, sulfates, sulfonates, alcohols, glycols and polymers soluble in polar liquids, from natural and/or synthetic source and/or derivatives) and/or a combination of the above.

In one embodiment, the reinforcing agent for the inorganic binder comprises at least one of: micrometric and/or nanometric fibers of an organic, inorganic or metallic nature (such as, by the way of example, basalt fiber, fiberglass, carbon fiber, halloysite, wollastonite, nanocellulose fiber) and/or a combination of the above.

In one embodiment, the complementary material comprises complementary raw materials commonly used in the manufacture of friction materials. In one embodiment, the complementary material comprises at least one of: mineral load; organic fiber; metal fiber, inorganic fiber; rubbing agent; lubricant; toughener; or a combination of the above.

In one embodiment, the mineral load comprises at least one or a combination of: barite; calcium carbonate; kaolin; lime hydrate, fluorite; talc; bentonite; among others.

In one embodiment, the organic fiber comprises at least one or a combination of: aramid; cellulose; acrylic; carbon; among others.

In one embodiment, the metal fiber comprises at least one or a combination of: copper; steel; aluminum; zinc; brass; among others.

In one embodiment, the inorganic fiber comprises at least one or a combination of: glass fiber; basalt; silica; aluminosilicate; titanates; among others.

In one embodiment, the rubbing agent comprises at least one or a combination of: alumina; zirconia; chromium oxide; silicon oxide; chromite; zirconium oxide; iron oxide; among others.

In one embodiment, the lubricant comprises at least one or a combination of: powdered natural graphite with different purities; natural flake graphite with different purities; synthetic graphite; metallic sulfides such as tin, iron, molybdenum, copper, manganese, among others.

In one embodiment, the toughener comprises at least one or a combination of: recycled rubber powder; SBR/NBR powder rubber; ball rubbers; among others.

In one embodiment, the step of forming a mixture between at least one liquid binder with at least one complementary material of the manufacturing process of friction material is performed by means of simultaneous or incremental mixing and granulation, which results in a mix with adequate fluidity for the subsequent steps of cold forming and completion of the mixture cure.

In one embodiment, the manufacturing of the friction material is performed in a mechanical stirrer. In one embodiment, the manufacturing is performed in a conventional mixer specific for liquids. In one embodiment, manufacturing is performed in a mixer for solids, liquids, and/or pasty/gel mixtures. In one embodiment, manufacturing is performed with a predetermined rotation and selected as a function of the viscosity of the mixture. In one embodiment, the inorganic precursor is added piecemeal until complete homogenization.

In one embodiment, the cold forming step of the mixture between liquid binder and complementary material is carried out without a great demand for high temperatures/heat, pressure and time, that is, the cold forming step reduces expenses energy sources.

In one embodiment, the step of cold forming the mixture is carried out in a temperature range less than 150 °C. In another embodiment, the step of cold forming the mixture is carried out in a temperature range between room temperature and 100 °C. In another embodiment, the step of cold forming the mixture is carried out in a temperature range between 0 °C to 150 °C.

In one embodiment, the step of cold forming the mixture is performed at a pressure range less than or equal to 300 MPa. In another embodiment, the step of cold forming the mixture is carried out in a pressure range between 0 to 200 MPa.

In one embodiment, the step of cold forming the mixture is performed in a time range between 2 and 300 seconds. In another embodiment, the step of cold forming the mixture is carried out over a time range of 6 to 120 seconds.

In one embodiment, the final step of curing the mixture between liquid binder and complementary material is carried out in a temperature range from 10 to 500 °C. In another embodiment, the final step of curing the mixture is carried out in a temperature range of 25 to 400 °C.

In one embodiment, the final step of curing the mixture between liquid binder and complementary material is carried out in a time range from 5 minutes to 48 hours. In another embodiment, the final step of curing the mixture is carried out over a time range of 15 minutes to 24 hours.

In one embodiment, the manufacturing process of friction material comprises an additional final step for finishing and improving the friction material, in which in this step cuts, painting, stamping and packaging of the material are performed.

The manufacturing process of friction material of the present invention provides several energy and environmental advantages, such as the mechanical activation step by means of grinding of the liquid binder manufacturing process allowing the use of a variety of inorganic precursors, forming partial or total crystalline and/or amorphous structures.

Furthermore, it provides the advantage that the combination of the mechanically activated inorganic precursor with at least one solution of alkali metal/ alkaline-earth metal hydroxide and/or alkali metal/alkaline-earth metal silicate, forming the liquid binder, improves solubility and facilitates mixing, which allows the energy demand for the subsequent stages of formation of the friction material to be considerably reduced, as it allows the forming to be performed cold (at significantly lower temperatures compared to the prior art), under considerably lower pressure than in the prior art, or even without pressure, and with extraordinarily shorter compression time than in the prior art. Furthermore, it has the advantage of allowing the curing to be carried out at relatively low temperatures and with a reduced process time compared to the state of the art.

In addition, the step of mechanical activation of inorganic precursor by means of grinding, forming partial or total crystalline and/or amorphous structure, is a process step of high complexity of execution, which aims to achieve a fine and adequate particle size that provides the aforementioned advantages.

In a second object, the present invention presents an inorganic liquid binder comprising a combination of at least one solution and at least one mechanically activated crystalline and/or amorphous inorganic precursor, wherein said solution comprises at least one hydroxide of alkali metal/alkaline-earth metal and/or at least one alkali metal/alkaline-earth metal silicate.

In one embodiment, the inorganic precursor is mechanically activated by means of a grinding process, which allows the use of a variety of inorganic materials/precursors, which gives the manufacturer greater possibilities for combinations or choice of inorganic precursors. Also, through mechanical activation, it allows the inorganic precursor to have partial or total crystalline and/or amorphous characteristics.

In one embodiment, the inorganic liquid binder improves the solubility and facilitates mixing with other complementary materials of friction material, which allows the energy demand for the subsequent stages of formation of the friction material to be considerably reduced. Furthermore, it allows the conformation step of the friction material to be carried out cold, with significantly lower temperature, pressure and compression time compared to the state of the art. Furthermore, it allows curing to be carried out with reduced temperature and process time compared to the state of the art.

In a third object, the present invention presents the use of inorganic liquid binder for the manufacture of friction material comprising a mixture of inorganic liquid binder with at least one complementary material, wherein:
a. the liquid binder comprises a combination of at least one solution and at least one mechanically activated crystalline and/or amorphous inorganic precursor, wherein said solution comprises at least one alkali metal/alkaline-earth metal hydroxide and/or at least one alkali metal/alkaline-earth metal silicate; and
b. the complementary material comprises at least one of:
   i. mineral load;
   ii. organic fiber;
   iii. metal fiber;
   iv. inorganic fiber;
   v. rubbing agent;
   vi. lubricant;
   vii. toughener; or
   viii. a combination of the above.

In one embodiment, the use of inorganic liquid binder for manufacturing a friction material brings several energy and environmental advantages to the manufacturing process and provides a friction material with improved and enhanced characteristics. In one embodiment, the mixture between at least one inorganic liquid binder and at least one complementary material of friction material results in a mixture with adequate fluidity for the subsequent forming and curing steps, which provides a reduction in temperature, pressure and time of process, being more energy efficient.

In a fourth object, the present invention presents a friction material comprising a mixture of at least one inorganic liquid binder and at least one complementary material, wherein the binder comprises a combination of at least one solution and at least one mechanically activated crystalline and/or amorphous inorganic precursor, wherein said solution comprises at least one alkali metal/alkaline-earth metal hydroxide and/or at least one alkali metal/alkaline-earth metal silicate.

### Example 1 - Manufacturing process of inorganic liquid binder

The examples shown herein are intended only to exemplify one of the numerous ways to carry out the invention, however without limiting its scope.

In such example, an inorganic liquid binder was developed for use in the manufacturing of friction material. Several formulations were tested and developed in order to obtain an inorganic liquid binder with adequate fluidity for mixing with other common components of friction materials.

The process of obtaining inorganic liquid binder basically follows two steps: the first being the mechanical activation of at least one inorganic precursor by means of grinding, forming crystalline and/or amorphous structures; and the second being the thermal synthesis with the combination of the ground inorganic precursor with at least a solution of alkali metal/alkaline-earth metal hydroxide and/or alkali metal/alkaline-earth metal silicate, forming the liquid binder.

Obtaining a inorganic liquid binder from the mixture of at least one inorganic precursor mechanically activated and at least one solution of alkali metal/alkaline-earth metal and/or alkali metal/alkaline-earth metal silicate, without the need for drying and grinding after the mixing step is an important advantage of the process of the present invention, since it eliminates the need for drying at high temperatures and subsequent grinding of the mixture of inorganic precursor with the solution, steps carried out in the state of the art. This characteristic of the process considerably improves the energy efficiency of the process, reducing the energy required in the form of heat from the drying ovens.

In the manufacturing process of liquid binder of the present invention, the initial step of mechanical activation of at least one inorganic precursor by means of grinding is the most important step of the process, differentiating the obtainment of binder in relation to the state of the art, as it enables the use of a variety of inorganic precursors.

The mechanical activation step of the inorganic precursor grinds the inorganic precursor in a range of fine and suitable granulometry. This step requires high execution complexity to arrive at the fine and adequate particle size, since the process of the present invention allows for the use of different types of inorganic precursors in the manufacture of the inorganic liquid binder of the present invention. In this example, fine and suitable particle sizes between 25 µm to 45 µm were obtained, these particle sizes being much smaller in relation to the prior art particle sizes.

The step of combining the mechanically activated inorganic precursor with the alkali metal/ alkaline earth metal hydroxide and/or alkali/ alkaline earth metal silicate solution is performed in a mixer at a predetermined time, forming a solution and/or suspension with varied viscosities.

In this example, inorganic crystalline and/or amorphous precursors were used with a high percentage composition of SiO₂ and Al₂O₃, such as igneous rocks; kaolins; metakaolins; rice husk ash; blast furnace slag; fly ash; wollastonite; and/or glasses.

Also, mixtures of oxides and/or hydroxides and/or silicates of alkali and alkaline earth metals in solution and/or suspension were used.

In a first example of liquid binder formulation comprises a range of 22.6 to 56% of corrected potassium silicate R = 1.5 or corrected sodium silicate R = 1.5; a range of 35 to 46% of metakaolin; and a range of 0 to 10% of water.

In a second example of liquid binder formulation comprises a range of 22.6 to 56% of corrected potassium silicate R = 1.5, or potassium silicate, or sodium silicate, or corrected sodium silicate R = 1.5; a range of 44-55% of rice husk ash; and a range of 0 to 10% of water.

In a third example of liquid binder formulation comprises a range of 22.6 to 50% of potassium silicate corrected R = 1.5, or potassium silicate, or sodium silicate, or sodium silicate corrected R = 1.5; a range of 50 to 70.4% of blast furnace slag; a range of 0 to 10% of rice husk ash; a range of 0 to 2% of aminosilane; a range of 0 to 2% of carboxymethylcellulose; a range of 0 to 10% of polyvinyl alcohol; a range of 0 to 5% of glycerol; a range of 0 to 1% of polyethylene glycol; a range of 0 to 1% of hexamethylcellulose; a range of 0 to 1% of polyacrylamide; a range of 0 to 10% of basalt fiber; a range of 0 to 3% of fiberglass; a range of 0 to 3% of carbon fiber; a range of 0 to 3% of halloysite; a range of 0 to 3% of wollastonite; and a range of 0 to 10% of water.

In a fourth example of liquid binder formulation comprises a range of 22.6 to 50% of corrected potassium silicate R = 1.5, or potassium silicate, or sodium silicate, or corrected sodium silicate R = 1.5; a range of 10 to 40% of rice husk ash; a range of 10 to 40% of wollastonite; a range of 0 to 2% of aminosilane; a range of 0 to 2% of carboxymethylcellulose; a range of 0 to 10% of polyvinyl alcohol; a range of 0 to 5% of glycerol; a range of 0 to 1% of polyethylene glycol; a range of 0 to 1% of hexamethylcellulose; a range of 0 to 1% of polyacrylamide; a range of 0 to 10% of basalt fiber; a range of 0 to 3% of fiberglass; a range of 0 to 3% of carbon fiber; a range of 0 to 3% of halloysite; and a range of 0 to 10% of water.

In a fifth example liquid binder formulation comprises a range from 22.6 to 50% of potassium silicate, a range from 50 to 75% of fly ash, a range from 0 to 2% of aminosilane, a range from 0 to 2% of carboxymethylcellulose, a range from 0 to 10% of polyvinyl alcohol, a range from 0 to 5% of glycerol, a range from 0 to 1% of polyethylene glycol, a range from 0 to 1% of hexamethylcellulose, a range from 0 to 1% of polyacrylamide, a range from 0 to 10% of basalt fiber, a range of 0 to 3% of fiberglass, a range of 0 to 3% of carbon fiber, a range of 0 to 3% of halloysite, and a range of 0 to 10% of water.

In a sixth example liquid binder formulation comprises a range of 22.6 to 50% of sodium silicate, or corrected sodium silicate R = 1.5 or corrected potassium silicate R = 1.5; a range of 50 to 75% of fly ash; a range of 0 to 2% of aminosilane; a range of 0 to 2% of carboxymethylcellulose; a range of 0 to 10% of polyvinyl alcohol; a range of 0 to 5% of glycerol; a range of 0 to 1% of polyethylene glycol; a range of 0 to 1% of hexamethylcellulose; a range of 0 to 1% of polyacrylamide; a range of 0 to 10% of basalt fiber; a range of 0 to 3% of fiberglass; a range of 0 to 3% of carbon fiber; a range of 0 to 3% of halloysite; and a range of 0 to 3% of wollastonite.

Accordingly, the liquid binder formulations developed provide an inorganic liquid binder for application in the formulation of friction materials that brings advantages to the manufacturing process, such as improved solubility and greater ease of mixing with other complementary materials of friction material, which allows the energy demand for the subsequent stages of formation of the friction material to be considerably reduced.

### Example 2 - Manufacturing process of friction material

In this example, a friction material was developed from the combination of at least one inorganic liquid binder, as exemplified in example 1, with at least one complementary material in common use for manufacturing friction materials.

Also, a friction material for brake friction elements was developed that allows the replacement of the phenolic resin by an inorganic liquid binder, since the phenolic resin, used in about 95% of the friction materials of the prior art can pose risks to the environment, since, due to industrial and domestic pollutant sources and from agricultural activities, the phenolic resin can be deposited in the soil or in rivers, which can cause damage to wildlife. Furthermore, it has a relatively high carbon footprint, generating between 1.3 to 2.3 kg of carbon dioxide per kg of resin produced.

The first step of manufacturing the friction material is the step of obtaining the inorganic precursor, in which at least one inorganic precursor is mechanically activated by grinding until obtaining a range of fine and suitable granulometry.

The second step of the process is thermal synthesis by mixing the ground inorganic precursor with at least one alkali and alkaline earth metal hydroxide and/or silicate solution, forming an inorganic liquid binder, in which the binder is a solution and/or suspension with varying viscosities. This mixture is made in commercial mixers used in manufacturing process of friction materials.

The third step of the process is the mixing of the inorganic liquid binder with raw materials commonly used in the manufacture of friction materials, such as mineral loads, organic fibers, metal fibers, inorganic fibers, rubbing agents, lubricants, tougheners or a combination among the above. This mixing is carried out in commercial mixers used in the manufacture of friction materials.

The combination of the inorganic liquid binder with other raw materials of friction material are associated with a process of mixing the formulation and/or pre-mixing of the raw materials through mixing and granulation, in simultaneous or incremental ways, which results in a mixture with adequate viscosity for further processing steps such as forming and post-curing steps.

Further, the next step is the step of cold forming the mixture of liquid binder with raw materials of friction material, and it was carried out at temperatures between room temperature and 100 °C, with compaction pressures from 0 to 200 MPa and process times between 6 and 120 seconds.

The next step, in this example, is the post-curing step of the mixture formed in the previous step, and it was carried out at a temperature between 25 and 400 °C and with a process time between 15 minutes and 24 hours.

In addition, the final step of manufacturing friction material comprises the finishing and processing step of the material, with steps of painting, cutting, stamping and packaging.

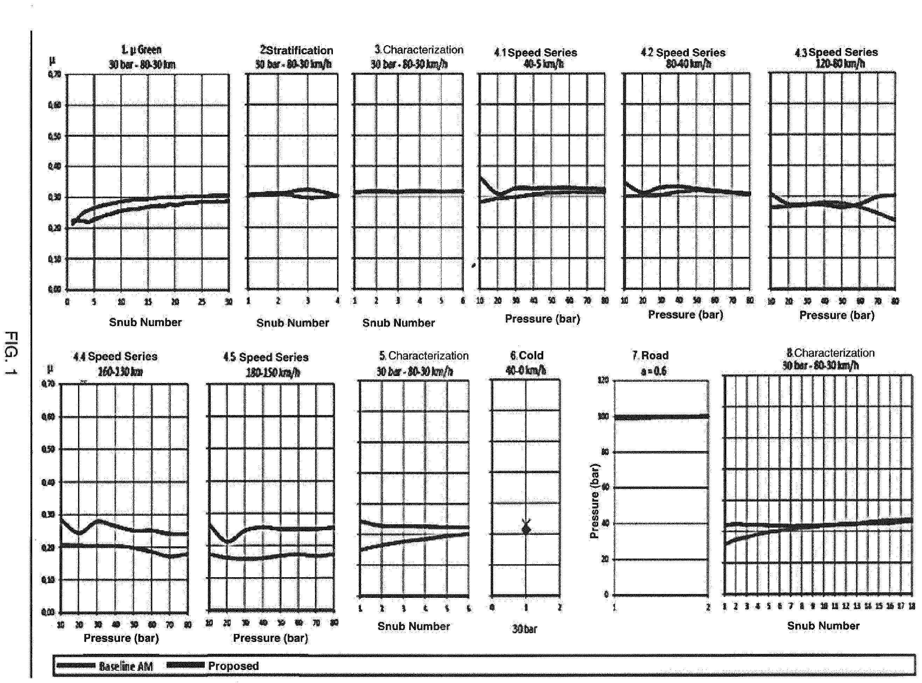

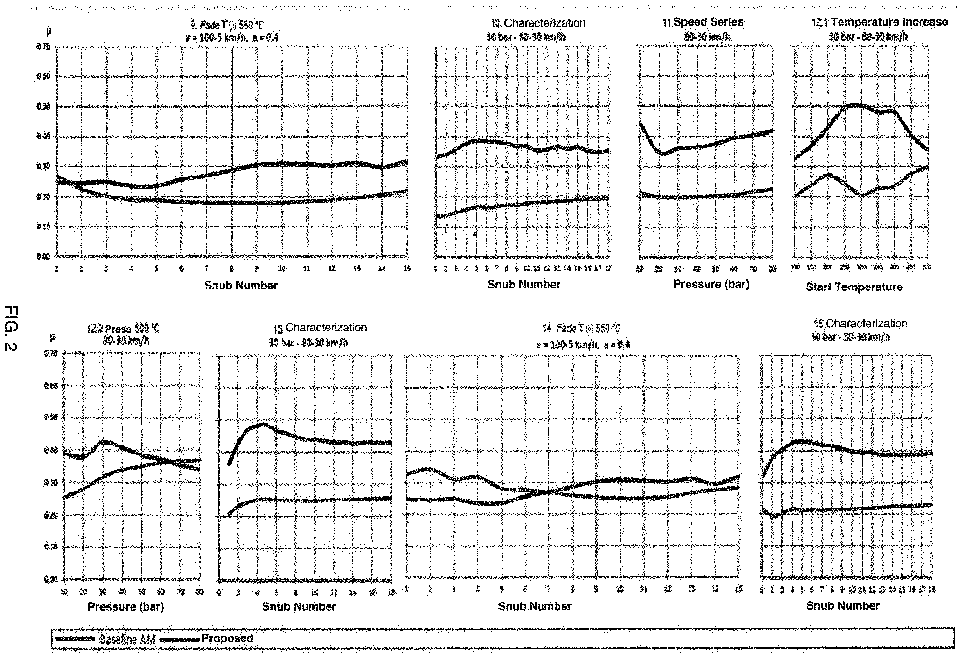

In this example, a material produced with the above steps was tested and applied to a front brake Ø 256 × 22 mm, with an applied inertia of 65 kg.m² evaluated via the Ak-Master-1998 procedure, widely used to evaluate materials of friction. The test results are illustrated in figures 1 and 2.

The graphs in figures 1 and 2 show a comparison of the friction coefficient under different brake application conditions, such as pressure, temperature and speed, between a commercial material used in replacement for light vehicles and the proposal produced with the technology described in this invention.

In this example, it is possible to note that the material proposed by the present invention has an initial friction coefficient very similar to the prior art material used in the comparison, and that it has no temperature loss during the step that evaluates the coefficient of friction with increasing temperature (fade step). Another point to be noted is the greater friction compared to the material used as a comparison, demonstrating the high potential of the technology for use in friction materials.

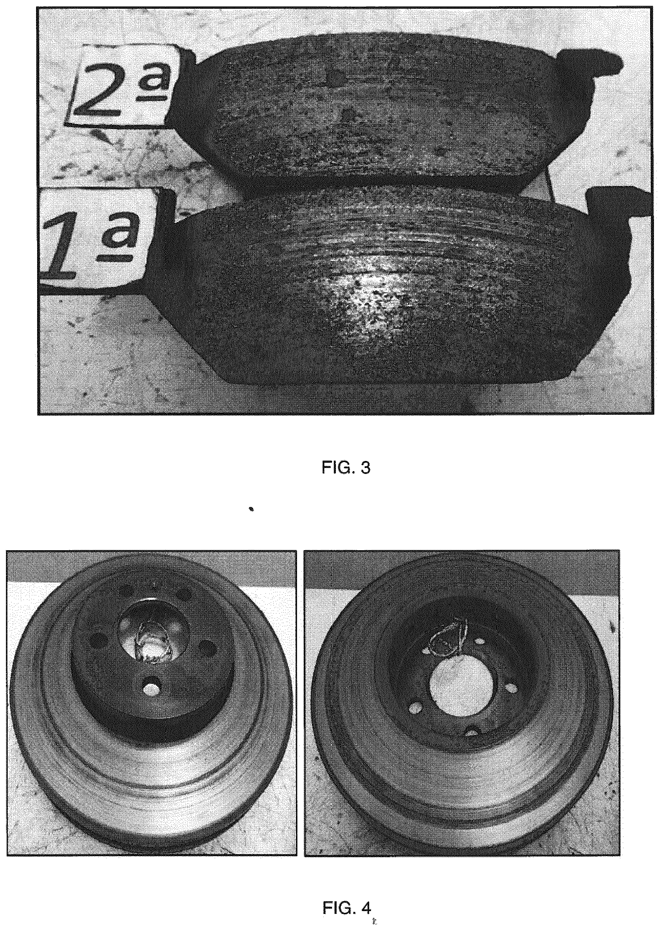

In figures 3 and 4 are observed photographs taken after the test in dynamometer, indicating the integrity of the material against the conditions imposed in the test, attesting that it has a satisfactory mechanical strength for the application. Another point to be noted is the low aggression to the disc, despite the inorganic nature of the ligand.

Table 1 below shows comparatively the wear results, again demonstrating the similarity between the materials of the prior art, and the potential use of the technology of the present invention.

**Table 1 - Comparison of Wear Results**

| **Material** | **Test No.** | **Disc Wear** | | **Pad Wear** | |
|---|---|---|---|---|---|
| | | (g) | (mm) | Average (mm) | Average (g) |
| *Baseline* AM | DL-0455/13 | 1.1 | 0.010 | 1.319 | 16.93 |
| Present Invention | DL-0180/19 | 4.1 | 0.024 | 1.240 | 16.05 |

Table 2 below summarizes a standard result of the evaluation of brake noise, whose results were evaluated with the procedure SAE J2521 2013, with a description of the percentage of noisy braking, frequencies of noise occurrences, as well as sound intensity.

**Table 2 - Occurrence of Noise in the Friction Material of the Present Invention (Procedure SAE J2521-2013)**

| **Major Peaks Only** | | | | | | | | | |
|---|---|---|---|---|---|---|---|---|---|
| | | **Number of noisy braking** | | | | **Percentage of noisy braking** | | | |
| Frequency Range | Threshold | Global | Drag | Decelerate | Back/ Front | Global | Drag | Decelerate | Back/ Front |
| 2 kHz to 16 | ≥70 db(A) | 84 | 47 | 29 | 8 | 4.4% | 4.4% | 4.4% | 4.0% |
| kHz | ≥80 db(A) | 61 | 34 | 21 | 6 | 3.2% | 3.2% | 3.2% | 3.0% |
| 2 kHz to 4 | ≥70 db(A) | 40 | 31 | 8 | 1 | 2.1% | 2.9% | 1.2% | 0.5% |
| kHz | ≥80 db(A) | 34 | 26 | 7 | 1 | 1.8% | 2.4% | 1.1% | 0.5% |
| 4 kHz to 6 | ≥70 db(A) | 2 | 0 | 2 | 0 | 0.1% | 0.0% | 0.3% | 0.0% |
| kHz | ≥80 db(A) | 0 | 0 | 0 | 0 | 0.0% | 0.0% | 0.0% | 0.0% |
| 6 kHz to 10 | ≥70 db(A) | 9 | 0 | 7 | 2 | 0.5% | 0.0% | 1.1% | 1.0% |
| kHz | ≥80 db(A) | 5 | 0 | 5 | 0 | 0.3% | 0.0% | 0.8% | 0.0% |
| 10 kHz to | ≥70 db(A) | 33 | 16 | 12 | 5 | 1.7% | 1.5% | 1.8% | 2.5% |
| 14 kHz | ≥80 db(A) | 22 | 8 | 9 | 5 | 1.1% | 0.8% | 1.4% | 2.5% |
| 14 kHz to | ≥70 db(A) | 0 | 0 | 0 | 0 | 0.0% | 0.0% | 0.0% | 0.0% |
| 16 kHz | ≥80 db(A) | 0 | 0 | 0 | 0 | 0.0% | 0.0% | 0.0% | 0.0% |
| | | **Total number of braking applications** | | | | 1917 | 1064 | 653 | 200 |

Table 3 below shows a comparison between the average noise found for the commercial material of the prior art and the present invention. It is again possible to note the similarity and potential of the invention in the development of friction materials.

**Table 3 - Noise Comparison**

| **Material** | **Noise level (% breaks > 70 dB)** |
|---|---|
| **Baseline AM (Average)** | 3 |
| **Present Invention** | 4.4 |

As can be seen, the manufacturing process of friction material of the present invention promotes greater energy efficiency, since it makes use of significantly low temperatures in the forming and post-curing processes, makes use of substantially low pressure in the step forming the mixture and has extraordinarily shorter processing time in the forming and post-curing processes.

The aforementioned energy advantages are provided by the use of the inorganic liquid binder developed in the present invention, wherein said binder is formed by one at least one inorganic precursor mechanically activated mixed with at least one solution of alkali metal/alkaline-earth metal hydroxide and/or alkali metal/alkaline-earth metal silicate.

Additionally, the difference between this invention and the state of the art is the formation of an inorganic precursor in the solid phase from the mechanical activation step of the precursors through grinding, which differs from the thermal activation reported in the Davidovits theory (Davidovits, J., 2015. Geopolymer:Chemistry and application.Saint-Quentin: Institut Géopolymere) and the alkaline activation described by Provis (Provis, J. L., van Deventer J.S.J. Alkali Activated Materials. Vol 13.; 2014. doi:10.1007/978-94-007-7672-2_5), using as precursor different raw materials from different rocks and by-products of the steel, thermoelectric and ceramic industries, such as igneous rocks, rice husk ash, blast furnace slag, metakaolin, kaolin, wollastonite etc., which can form a partial or total amorphous structure detected by X-ray diffraction. Furthermore, the manufacturing process of friction material differs from the state of the art in that the liquid binder is mixed with the raw materials of the friction material as a viscous solution and/or suspension (from 100 to 50000 cP) which may or may not have its processing humidity adjusted and controlled before the forming process, according to the process steps described throughout the invention.

The inventive concept now revealed and exemplified in one or more ways was considered as an industrial secret and was not previously disclosed until the time of filing this patent application. This trade secret is the depositor's intangible asset. The eventual future publication of the patent application does not, in itself, constitute an authorization for use by third parties, serving only as: (i) making third parties aware of the existence of said industrial secret on the filing date; (ii) unequivocal indication of its holder; and (iii) encouraging the development of new improvements based on the concept now revealed, to avoid reinvestment in the development of the same asset already held by the depositor. It is immediately noted that any commercial use requires authorization from the holder and that unauthorized use entails sanctions provided for in the Law. In this context, hereby we clarify that as of disclosure of the present inventive concept, those skilled in the art may consider other forms to implement the invention not identical to those merely exemplified above, but in the event of intended commercial use such forms may be considered as falling within the scope of the appended claims.

## Claims

1. Manufacturing process of friction material **characterized in that** it comprises at least the steps of:
a. combination of at least one liquid binder with at least one complementary material, forming a mixture;
b. cold forming of the mixture with predetermined temperature, pressure and compression time; and
c. completion of the mixture curing with predetermined temperature and time.

2. Process according to claim 1, **characterized in that** the liquid binder is manufactured by means of at least the steps of:
a. mechanical activation of at least one inorganic precursor by means of grinding, forming a crystalline and/or amorphous structure; and
b. combination of the mechanically activated inorganic precursor with at least one solution of alkali metal/alkaline-earth metal hydroxide and/or alkali metal/alkaline-earth metal silicate, forming the liquid binder.

3. Process according to any one of claims 1 to 2, **characterized in that** the liquid binder is a solution and/or a suspension and comprises a viscosity in a range between 10 to 100000 cP.

4. Process according to claim 1, **characterized in that** the complementary material comprises at least one of:
a. mineral load;
b. organic fiber;
c. metal fiber;
d. inorganic fiber;
e. rubbing agent;
f. lubricant;
g. toughener; or
h. a combination of the above.

5. Process according to claim 2, **characterized in that** the mechanical activation step of at least one inorganic precursor occurs with the grinding of the inorganic precursor in a particle size range of less than 500 µm.

6. Process according to any one of claims 1 to 5, **characterized in that** the step of cold forming the mixture is carried out with a temperature range lower than 150 °C; a pressure less than or equal to 300 MPa; and a time range between 2 and 300 seconds.

7. Process according to any one of claims 1 to 6, **characterized in that** the final curing step of the mixture is carried out with a temperature range from 10 to 500 °C; and in a time range of 5 minutes to 48 hours.

8. Inorganic liquid binder **characterized in that** it comprises a combination of at least one solution and at least one mechanically activated crystalline and/or amorphous inorganic precursor, wherein said solution comprises at least one alkali metal/ alkaline-earth metal hydroxide and/or at least an alkali metal/alkaline-earth metal silicate.

9. Use of inorganic liquid binder for the manufacture of friction material **characterized in that** it comprises a mixture of inorganic liquid binder with at least one complementary material, wherein:
a. the liquid binder comprises a combination of at least one solution and at least one mechanically activated crystalline and/or amorphous inorganic precursor, wherein said solution comprises at least one alkali metal/alkaline-earth metal hydroxide and/or at least one alkali metal/alkaline-earth metal silicate; and
b. the complementary material comprises at least one of:
i. mineral load;
ii. organic fiber;
iii. metal fiber;
iv. inorganic fiber;
v. rubbing agent;
vi. lubricant;
vii. toughener; or
viii. a combination of the above.

10. Friction material **comprising** a mixture of at least one inorganic liquid binder and at least one complementary material, wherein the binder comprises a combination of at least one solution and at least one mechanically activated crystalline and/or amorphous inorganic precursor, wherein said solution comprises at least one alkali metal/alkaline-earth metal hydroxide and/or at least one alkali metal/alkaline-earth metal silicate.
